(19) Europäisches Patentamt
European Patent Office
Office européen des brevets

(11) Veröffentlichungsnummer: **0 002 519**
**B1**

(12) # EUROPÄISCHE PATENTSCHRIFT

(21) Anmeldenummer: **78101655.5**

(22) Anmeldetag: **13.12.78**

(51) Int. Cl.³: **C 08 G 77/46, C 08 C 1/14**

(54) **Oxalkylierte Polysiloxane, deren Herstellung und Verwendung als Wärmesensibilisierungsmittel**

(30) Priorität: **20.12.77 DE 2756770**

(43) Veröffentlichungstag der Anmeldung:
**27.06.79 Patentblatt 79/13**

(45) Bekanntmachung des Hinweises auf die Patenterteilung:
**26.11.80 Patentblatt 80/24**

(84) Benannte Vertragsstaaten:
**BE DE FR GB IT NL**

(56) Entgegenhaltungen:
**DE - A - 1 494 037**
**DE - B - 1 243 394**
**DE - B - 1 300 290**
**FR - A - 1 528 304**

(73) Patentinhaber: **BAYER AG**
**Zentralbereich Patente, Marken und Lizenzen**
**D - 5090 Leverkusen 1, Bayerwerk (DE)**

(72) Erfinder: **Perrey, Hermann, Dr.**
**Am Oberfeld 39**
**D - 4150 Krefeld (DE)**
**Matner, Martin, Dr.**
**Dorfstrasse 14**
**D - 5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Oxalkylierte Polysiloxane, deren Herstellung und Verwendung als Wärmesensibilisierungsmittel

Wärmesensibilisierte Latexmischungen sind bekannt. Sie werden aus wärmesensibel einstellbaren Polymerlatices hergestellt. Diese Latices können durch Emulsionspolymerisation hergestellt werden. Ihre Wärmesensibilisierung und dazu geeignete Mittel ist z.B. in den deutschen Patentschriften 1 268 828 und 1 494 037 beschrieben.

Ein Verfahren zur Herstellung von wärmesensibilisierbaren Synthesekautschuk-Latices beschreibt die deutsche Patentschrift 1 243 394. Wärmesensibilisierte Latexmischungen können zur Imprägnierung von Faservliesen und zur Herstellung von Hohlkörpern (z.B. Handschuhen) nach dem Tauchverfahren verwendet werden.

Aus der Deutschen Auslegeschrift 1 300 290 ist die Herstellung von oxalkylierten Polysiloxanen bekannt. Diese Produkte besitzen einen Polyglykoletherrest, der durch Mischpolymerisation von Ethylenoxid mit Propylenoxid hergestellt wird. Dieser Rest weist eine statistisch unregelmäßige Anordnung von Ethylen- und Propylenoxideinheiten auf.

Die mit oxalkylierten Polysiloxanen hergestellten Latexmischungen sind jedoch nicht ausreichend stabil. Je nach Latextyp und Einsatzmenge des Koaguliermittels fällt die anfangs beobachtete Koagulationstemperatur mit der Zeit ab und führt zu koagulierten Mischungen. Zur Herstellung stabiler Mischungen müssen nichtionogene Emulgatoren zugesetzt werden. Hierduch wird zwar die Stabilität verbessert, andererseits aber die Wärmesensibilisierbarkeit verschlechtert, d.h., man braucht größere Mengen an Wärmesensibilisatoren, um eine vorgegebene Koagulationstemperatur einzustellen.

Überrashenderweise wurde nun gefunden, daß bestimmte alkoxylierte Polysiloxane auch ohne Emulgatorzusätze zu stabilen wärmesensiblen Latexmischungen führen.

Gegenstand der Erfindung sind demnach alkoxylierte Polysiloxane der allgemeinen Formel

$$R_1-\underset{R_1}{\overset{R_1}{Si}}-O\left(-\underset{X}{\overset{R_2}{Si}}-O\right)_n\left(-\underset{R_4}{\overset{R_3}{Si}}-O\right)_m-\underset{R_1}{\overset{R_1}{Si}}-R_1 \qquad (I)$$

in der diese Formel die Bruttozusammensetzung eines linearen, statistisch verteilten Copolymeren aus

$$n\ -\underset{X}{\overset{R_2}{Si}}-O \quad \text{und} \quad m\ -\underset{R_4}{\overset{R_3}{Si}}-O- \quad \text{Einheiten mit} \quad R_1-\underset{R_1}{\overset{R_1}{Si}}-O-\text{Endgruppen}$$

darstellt und in der

$R_1$, $R_2$ und $R_3$ unabhängig voneinander einen gegebenenfalls durch Halogene substituierten Alkyl- oder Arylrest mit 1—10 C-Atomen bedeuten,

$R_4$ für Wasserstoff oder einen gegebenenfalls durch Halogen substituierten Alkyl- oder Arylrest mit 1—10 C-Atomen steht,

n eine Zahl von 1—50 und

m eine Zahl von 0—50 und

X für den Rest

$$-(CH_2)_p-(Y)_q-(O-CH_2-CH_2)_x-(O-CH_2-\underset{CH_3}{\underset{|}{CH}})_y-OR_5 \qquad (Ia)$$

steht und worin

p eine Zahl von 1—8 und

q Null oder die Zahl 1 bedeutet,

y für

$$\underset{CH_2-OH}{\underset{|}{-CH-}},\quad -\underset{OH}{\underset{|}{CH}}-CH_2-,\quad -O-CH_2-CHOH-CH_2-\quad \text{oder}\quad -O-CH_2-\underset{CH_2-OH}{\underset{|}{CH-}}$$

steht,

$R_5$ einen Alkylrest eines niederen Alkohols darstellt und

x und y für die Zahlen 5—100 steht, die dadurch gekennzeichnet sind, daß der Rest

$$-(O-CH_2-CH_2)_x-(O-CH_2-\underset{\displaystyle CH_3}{\underset{|}{CH}})_y-OR_5$$

durch Umsetzung eines niederen Alkohols $R_5OH$ zunächst mit einer Mischung aus Propylenoxid und 80—90% der gesamten Menge des Ethylenoxides und anschließend mit den restlichen 10—20% des Ethylenoxides ist herstellbar.

Bevorzugt stehen in den Formel (I) und (Ia).

$R_1$, $R_2$ und $R_3$ für die Phenyl- und Methylgruppen und besonders bevorzugt für die Methylgruppe,
$R_4$ für Wasserstoff und Methylgruppen und besonders bevorzugt für die Methylgruppe,
n für die Zahlen 3—20 und besonders bevorzugt für die Zahlen 4—10,
m für die Zahlen 0—20 und besonders bevorzugt für die Zahlen 0—10,

y für $-O-CH_2-CHOH-CH_2-$ oder $-O-CH_2-\underset{\displaystyle CH_2-OH}{\underset{|}{CH}}-$

P für die Zahlen 1 und 3 und besonders bevorzugt für die Zahl 3,
q für Null und besonders bevorzugt für die Zahl 1,
$R_5$ für einen 1 bis 6-Atome enthaltenden Alkylrest,
x für die Zahlen 10—50 und besonders bevorzugt für 15—35 und
y für die Zahlen 8—40 und besonders bevorzugt für 12—25.

Die erfindungsgemäßen alkoxylierten Polysiloxane können durch Umsetzung von $Si-CH_2-Cl$-gruppenhaltigen Polysiloxanen mit Polyalkylenglykolmonoethern hergestellt werden. Ebenso ist es möglich, Polyalkylenglykolmonoether zunächst mit Alkenylhalogeniden, wie z.B. Allylchlorid, in ungesättigte Polyalkylenglykoldiether zu überführen und diese dann platinkatalysiert an SiH-gruppenhaltige Polysiloxane zu addieren.

Vorzugsweise jedoch werden Epoxide, die eine C = C-Doppelbindung enthalter, wie z.B. Allylglycidether oder Butadienmonoepoxid, platinkatalysiert mit SiH-gruppenhaltigen Polysiloxanen zu Polyepoxypolysiloxanen umgesetzt, die dann durch vorzugsweise sauer katalysierte Reaktion der Epoxygruppen mit Polyalkylenglykolmonoethern zu den erfindungsgemäßen Produkten führen.

Die zur Herstellung der oxalkylierten Polysiloxane verwendeten Polyalkylenglykolmonoether erhält man durch Polyalkoxylierung niederer Alkohole, wie z.B. Methanol, Ethanol, Propan-, Butan-, Pentan- oder Hexanole, mit Ethylen- und Propylenoxid. Die Alkohole werden zunächst mit einer Mischung aus Propylenoxid und 80—90% der gesamten Menge des Ethylenoxids zur Mischpolymeren umgesetzt und hierauf die restlichen 10—20% des Ethylenoxids eingebracht so daß die Endgruppen dieser Polyalkylenglykolmonoether nahezu vollständig primäre OH-Gruppen sind. Auf diese Weise erhält man zwangsläufig eine definierte regelmäßige Anordnung der Ethylenoxid- und Propylenoxideinheiten zueinander.

Bevorzugte Polyalkylenglykolmonoether enthalten 40—60 Gew.-% Ethylenoxid, besonders bevorzugte sind aus gleichen Gewichtsmengen Ethylen- und Propylenoxid aufgebaut. Bevorzugt werden Polyalkylenglykolmonoether mit Molekulargewichten von 1000—5000, besonders bevorzugt mit 1500 bis 3000 eingesetzt.

Bei der vorzugsweise sauer katalysierten Umsetzung der Polyepoxypolysiloxane mit den Polyalkylenglykolmonoethern zu den erfindungsgemäßen Polyalkylenglykolpolysiloxanen werden die Hydroxyverbindungen bevorzugt in 10—100%igem und besonders bevorzugt in 10—50%igem molaren Überschuß mit den Epoxygruppen umgesetzt. Geringere Überschüsse, sowie stöchiometrische oder gar unterstöchiometrische Umsetzungsverhältnisse von Hydroxy- zu Epoxygruppen sind zwar ebenfalls möglich, führen jedoch häufig nur zu unlöslichen, vernetzten Produkten.

In der Regel wird die Umsetzung lösungsmittelfrei durchgeführt, es können auch inerte Lösungsmittel, wie z.B. Benzol, Toluol, Xylol, Chlorbenzol, Äthylacetat, Butylacetat, Methylenchlorid, Chloroform, Tetrachlorkohlenstoff, Trichlorethylen, Perchlorethylen oder Dimethylformamid eingesetzt werden. Dieses ist in den Fällen angebracht, in denen die Polyalkylenglykolmonoether bei den Reaktionstemperaturen fest oder so hochviskos sind, daß Rühren unmöglich ist. Als saure Katalysatoren werden Produkte wie z.B. p-Toluolsulfonsäure, Salzsäure, Schwefelsäure, Phosphorsäure oder vorzugsweise Bortrifluorid-Addukte, wie z.B. Bortrifluoridetherat, in Konzentration von 0,05—2%, vorzugsweise 0,1—1,0%, bezogen auf das Reaktionsgemisch, angewendet. Geeignete Reaktionstemperaturen liegen zwischen 0 und 100°C, vorzugsweise 10 bis 80°C. Vorzugsweise werden die Polyalkylenglykolmonoether mit den sauren Katalysatoren vorgelegt und unter Rühren bei Raumtemperatur die Polyepoxypolysiloxane vorzugsweise lösungsmittelfrei derart zudosiert, daß die Reaktionstemperatur nicht über 30°C steigt. Anschließend rührt man noch 1 bis 5 Stunden bei Raumtemperatur und 1 bis 3 Stunden bei 60°C nach.

In der Regel sind die erfindungsgemäßen Verbindungen wasserlöslich, aber auch wasserunlösliche Produkte sind erfindungsgemäß verwendbar. Da die Wirksamkeit der Polyalkylenglykolpolysiloxane als Wärmesensibilisierung mit guter Verteilung der Produkte steigt, ist es bei wasserunlöslichen Substanzen angebracht, zur Verbesserung der Emulgierbarkeit den Produkten gängige Emulgatoren, wie z.B. Alkylarylsulfonate, Alkylsulfate, Fettsäuresalze oder dergleichen zuzufügen. Zusätze von 1—10%, bezogen auf die Polyalkylenglykolpolysiloxane, sind meist ausreichend, größere Mengen sind zu vermeiden, da sich anionenaktive Emulgatoren als solche ungünstig auf die Stabilität der Latexmischungen auswirken können.

Die erfindungsgemäßen Verbindungen können als Wärmesensibilisierungsmittel für Kautschuklatices eingesetzt werden.

Zur Herstellung der wärmesensibilisierbaren stabilen Latices selbst können übliche olefinisch ungesättigte Monomere in wäßriger Emulsion polymerisiert werden. Beispiele für die Herstellung derartiger Latices finden sich in der deutschen Patentschrift 1 243 394 und in den deutschen Offenlegungsschriften 2 232 526 und 2 005 974. Als Monomere kommen alle radikalisch polymerisierbaren olefinisch ungesättigten Verbindungen infrage, z.B. Ethylen, Butadien, Isopren, Acrylnitril, Styrol, Divinylbenzol, $\alpha$-Methylstyrol, Methacrylnitril, Acrylsäure, Methacrylsäure, 2-Chlorbutadien-1,3, Ester der Acrylsäure und Methacrylsäure mit $C_1$—$C_8$-Alkoholen oder Polyolen, Acrylamid, Methacrylamid, N-Methylol(meth)acrylamid, (Meth)acrylamido-N-methylolmethylether, Itakonsäure, Maleinsäure, Fumarsäure, Diester und Halbester ungesättigter Dicarbonsäuren, Vinylchlorid, Vinylacetat, Vinylidenchlorid, die allein oder in Kombination miteinander eingesetzt werden können.

Die Polymerisation wird in Gegenwart von Emulgatoren durchgeführt, wobei die üblichen nichtionischen oder anionischen Emulgiermittel allein oder in Kombination miteinander verwendet werden können. Die Gesamtmenge an Emulgator beträgt ca. 0,1—10 Gew.-%, bezogen auf die Monomeren.

Die Emulsionspolymerisation kann mit Radikalbildnern, vorzugsweise mit organischen Peroxidverbindungen ausgelöst werden, die in Mengen von 0,01 bis 2 Gew.-%, bezogen auf Monomere, eingesetzt werden. Je nach Monomerkombination können zur Erniedrigung des Molekulargewichtes des Polymerisats geringe Mengen an Reglern mitverwendet werden, z.B. Mercaptane, Halogenkohlenwasserstoffe. Die Emulsionspolymerisation ist auf zwei Wegen möglich: Man kann die Gesamtmenge der Monomeren und den größten Teil der die Emulgatoren enthaltenden wäßrigen Phase vorlegen, die Polymerisation durch Zugabe des Initiators starten und im Verlauf der Polymerisation den Rest der wäßrigen Phase kontinuierlich oder absatzweise zugeben. Man kann auch die Technik des "Monomerenzulaufs" benutzen; dabei wird nur ein Teil der Monomeren und der das Emulgiermittel enthaltenen wäßrigen Phase vorgelegt und nach Starten der Polymerisation der Rest der Monomeren und der wäßrigen Phase gleichmäßig oder absatzweise nach Maßgabe des Umsatzes zugefügt. Der zudosierte Monomerenanteil kann in der wäßrigen Phase voremulgiert sein. Beide Verfahren sind bekannt.

Die wärmesensibel einstellbaren Latices können vor oder bei der Verarbeitung mit Zusatzstoffen versetzt werden. So unterstützen Säureabspalter, die zusätzlich zum Sensibilisierungsmittel beigefügt werden, die Koagulierfähigkeit, indem sie die Koagulationstemperatur herabsetzen. Andere Zusätze sind z.B. Farbstoffe, Pigmente, Füllstoffe, Verdicker, Elektrolyte, Alterungsschutzmittel, wasserlösliche Harze oder Vulkanisationschemikalien.

Im Anschluß an die Herstellung werden die wärmesensibilisierbaren Latices durch Zusatz der erfindungsgemäßen Verbindungen in Mengen von 0,05—10 Gew.-%, bezogen auf das Polymerisat, wärmesensibel eingestellt. Hierbei kann die Zugabe Produkte in 100%iger oder häufig vorteilhafter als wäßrige Lösung erfolgen. Es zeigt sich, daß die wärmesensiblen Latexmischungen, die die erfindungsgemäßen Produkte enthalten, auch bei längerer Lagerung stabil sind und keine Koagulatbildung auftritt.

Die erfindungsgemäßen wärmesensibel eingestellten Latexmischungen können z.B. zur Bindung von Faservliesen eingesetzt werden, die aus synthetischen oder natürlichen Fasern aufgebaut sind. Beispiele sind Faservliese aus Baumwolle, Zellwolle, Wolle, Polyamiden, Polyestern, Polyacrylnitril, Glasfasern, Steinwolle, Asbestwolle oder Metallfäden.

### Beispiel 1

Zu einer Mischung aus 1460 g eines Polyalkylenglykolmonoethers der OH-Zahl 25, der durch Alkoxylierung von Butanol mit gleichen Gewichtsteilen Ethylen- und Propylenoxid hergestellt wird, wobei zunächst 80% der Ethylenoxid-mit der gesamten Propylenoxidmenge im Gemisch und hierauf die restlichen 20% des Ethylenoxids umgesetzt werden, und 2 g Bortrifluoridetherat werden innerhalb einer Stunde 105 g eines Polyepoxypolysiloxans der Formel

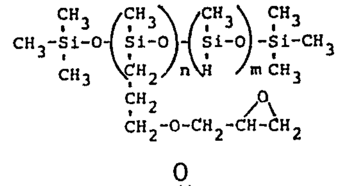

mit einem

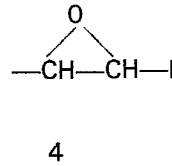

Epoxidgehalt

von 19.9 Gewichts-% und einem Si-H-Gehalt von 2.33 Gew.-% zugetropft. Hierauf wird 3 h bei Zimmertemperatur und 1 h bei 60°C nachgerührt. Man erhält ein farbloses, in kaltem Wasser klar lösliches Öl.

Beispiel 2

Analog Beispiel 1 werden 1460 g des in Beispiel 1 beschriebenen Polyalkylenglycolmonoethers unter Katalyse von 2 g Bortrifluoridetherat mit 100.5 g eines Polyepoxypolysiloxans der Formel

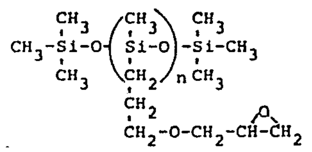

mit einem Epoxidgehalt von 20.9 Gew.-% umgesetzt. Man erhält ein farbloses, in kaltem Wasser klar lösliches Öl.

Beispiel 3

Analog Beispiel 1 werden 1460 g des in Beispiel 1 beschriebenen Polyalkylenglykolmonoethers unter Katalyse von 2 g Bortrifluoridetherat mit 225.6 g eines Polyepoxypolysiloxans der Formel

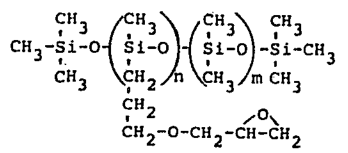

mit einem Epoxidgehalt von 9.3 Gew.-% umgesetzt. Man erhält ein farbloses, in kaltem Wasser klar lösliches Öl.

Beispiel 4

Analog Beispiel 1 werden 1700 g eines Polyalkylenglykolmonoethers der OH-Zahl 22, der durch Alkoxylierung von Butanol mit gleichen Gewichtsteilen Ethylen- und Propylenoxid hergestellt wird, wobei zunächst 80% der Ethylenoxid- mit der gesamten Propylenoxidmenge im Gemisch und hierauf die restlichen 20% des Ethylenoxids umgesetzt werden, unter Katalyse von 2.5 g Bortrifluoridetherat mit 105 g des im Beispiel 1 beschriebenen Polyepoxypolysiloxans umgesetzt. Man erhält ein farbloses, in kaltem Wasser klar lösliches Öl.

Beispiel 5

Analog Beispiel 1 werden 900 g eines Polyalkylenglykolmonoethers der OH-Zahl 40.5, der durch Alkoxylierung von Butanol mit einer Mischung aus 55 Gew.-% Ethylen- und 45 Gew.-% Propylenoxid hergestellt wird, wobei zunächst 82% der Ethylenoxid- mit der gesamten Propylenoxidmenge im Gemisch und hierauf die restlichen 18% des Ethylenoxids umgesetzt werden, unter Katalyse von 1.35 g Bortrifluoridetherat mit 105 g des im Beispiel 1 beschriebenen Polyepoxypolysiloxans umgesetzt. Man erhält ein farbloses in kaltem Wasser klar lösliches Öl.

Beispiel 6

Analog Beispiel 1 werden 1050 g eines Polyalkylenglykolmonoethers der OH-Zahl 35, der durch Alkoxylierung von Butanol mit gleichen Gewichtsteilen Ethylen- und Propylenoxid hergestellt wird, wobei zunächst 80% der Ethylenoxid- mit der gesamten Propylenoxidmenge im Gemisch und hierauf die restlichen 20% des Ethylenoxids umgesetzt werden, unter Katalyse von 1,5 g Bortrifluoridetherat mit 105 g des in Beispiel 1 beschriebenen Polyepoxypolysiloxans umgesetzt. Man erhält ein farbloses, in kaltem Wasser klar lösliches Öl.

Beispiel 7

210.0 Gew.-Teile eines 47.5%igen Latex des Copolymerisates von 61.0 Gew.-% Butadien, 35.0 Gew.-% Acrylnitril und 4 Gew.-% Methacrylsäure werden mit 40.0 Gew.-Tln. einer Vulkanisationspaste folgender Zusammensetzung:

| | | | |
|---|---|---|---|
| 0,2 | Gew.-Tle. | | Kolloidschwefel |
| 5,0 | " | " | Zinkoxid |
| 1,5 | " | " | 2-Mercaptobenzthiazol |
| 0,2 | " | " | Zink-diethyl-dithiocarbamat |

5,0 „ „ Titandioxid

28,1 „ „ einer 5%igen wäßrigen Lösung eines Kondensationsproduktes aus Naphthalinsulfonsäure mit Formaldehyd

0,2 „ „ des Wärmesensibilisierungsmittel des Beispiels 1 und

70,0 „ „ Wasser

vermischt und der Koagulationspunkt der Mischung nach 1/2 h und 7 Tagen Standzeit bestimmt.

Methode zur Ermittlung des Koagulationspunktes:
Ca. 10 g der wärmesensibel eingestellten Mischung werden in ein Becherglas eingewogen und in ein Wasserbad mit einer konstanten Temperatur von 80°C gebracht. Unter gleichmäßigem Rühren der Mischung mit einem Thermometer werden das Koagulierverhalten und der Temperaturanstieg verfolgt. Als Koagulationspunkt der Mischung wird die temperatur angegeben, bei der eine vollständige und endgültige Trennung von Polymerisat und wäßriger Phase eintritt.

Koagulationspunkt: nach 1/2 h 38°C
„ 7 Tagen 37°C

Bei Einsatz von 0,1 Gew.-Tln. des Wärmesensibilisierungsmittels des Beispiels 1 wird ermittelt:

Koagulationspunkte nach 1/2 h 48°C
„ 7 Tagen 49°C

Bei Einsatz von 0,4 Gew.-Tln des Wärmesensibilisierungsmittel wird gemessen:

Koagulationspunkte nach 1/2 h 34°C
„ 7 Tagen 33°C

Beispiel 8—12

Analog Beispiel 7 werden die Wärmesensibilisierungsmittel der Beispiele 2—6 in die Mischung eingesetzt und die Koagulationspunkte ermittelt.

| | Wärmesensibilisierungsmittel | | Koagulationspunkte nach | |
|---|---|---|---|---|
| | Einsatzmenge | aus Beisp. | 1/2 h | 7 Tagen |
| Beispiel-Nr. | g | | °C | °C |
| 8 | 0,2 | 2 | 38 | 38 |
| 9 | 1,0 | 3 | 43 | 44 |
| 10 | 0,2 | 4 | 43 | 45 |
| 11 | 0,2 | 5 | 48 | 50 |
| 12 | 0,2 | 6 | 42 | 43 |

Beispiel 13

Zu 200 g einer in üblicher Weise hergestellten 50%igen wäßrigen Dispersion eines Copolymerisates aus 62 Tln Butadien, 36 Tln. Acrylnitril und 2 Tln. Methacrylsäure werden 40,0 Gew.-Tle der in Beispiel 8 beschriebenen Vulkanisationspaste, 0,3 Gew.-Tle des Wärmesensibilisierungsmittels des Beispiels 1 und 80.0 Gew.-Tle. Wasser gegeben. Die Bestimmung der Koagulationspunkte nach den unter Beispiel 7 beschriebenen Methoden brachte folgendes Ergebnis.

Koagulationspunkte: nach 1/2 h 39°C
„ 7 Tagen 37°C

Beispiel 14

Zur Herstellung einer wärmesensibel verarbeitbaren Latexmischung werden folgende Bestandteile zusammengerührt:

225.0 Gew.-Tle. eines 45%igen Latex des Copolymerisates von 60.0 Gew.-% Butadien, 26.0

Gew.-% Styrol, 10,0 Gew.-% Acrylnitril, 3,0 Gew.-% Methacrylsäure und 1,0 Gew.-% Methacrylamid.

10,0 Gew.-Tle. einer 20%igen wäßrigen Lösung eines aliphatischen Alkohols
10,0 Gew.-Tle. einer 10%igen wäßrigen Ammoniumchloridlösung
40,0 Gew.-Tle. der in Beispiel 8 beschriebenen Vulkanisationspaste
0,8 Gew.-Tle. des Wärmesensibilisierungsmittels des Beispiels 1
72,0 Gew.-Tle. Wasser

Die Messung der Koagulationspunkte der Latexmischung hatte folgendes Ergebnis:

Koagulationspunkte: nach 1 h 43°C
„ 7 Tagen 43°C

Beispiel 15 (Vergleichsversuch)

Es wird eine Latexmischung analog Beispiel 7 hergestellt. Als Wärmesensibilisierungsmittel wird das Siloxan des Beispiels 2 der DAS 1 268 828 eingesetzt.

| Probe | Einsatzmenge g | Koagulationstemperatur nach 1/2 h (°C) | |
|---|---|---|---|
| a | 0,2 | keine Koagulation | |
| b | 2 | 69 | Die Mischung ist nach 2 Tg. bei RT koaguliert |
| c | 3 | 48 | Die Mischung ist nach 5 h bei RT koaguliert |

Beispiel 16 (Vergleichsversuch)

Es wird eine Latexmischung analog Beispiel 7 hergestellt. Als Wärmesensibilisierungsmittel wird das Organopolysiloxan A aus Beispiel 1 der DAS 1 494 037 eingesetzt.

| Probe | Einsatzmenge g | Koagulationstemperatur nach 1/2 h (°C) | |
|---|---|---|---|
| d | 0,1 | 74 | Die Mischung ist nach 2 h bei RT koaguliert |
| e | 0,2 | Die Mischung ist bereits nach einer halben Stunde koaguliert | |

RT = Raumtemperatur.

**Patentansprüche**

1. Oxalkylierte Polysiloxane der allgemeinen Formel

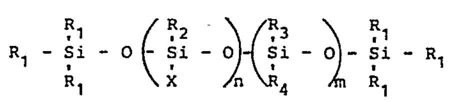 (I)

in der

$R_1$, $R_2$ und $R_3$ unabhängig voneinander einen gegebenenfalls durch Halogen substituierten Alkyl- und Arylrest mit 1—10 C-Atomen bedeuten,
$R_4$ für Wasserstoff oder einen gegebenenfalls durch Halogen substituierten Alkyl- oder Arylrest mit 1—10 C-Atomen steht,
n eine Zahl von 1—50 und
m eine Zahl von 0—50 und
X für den Rest

$$-(CH_2)_p-(Y)_q-(O-CH_2-CH_2)_x-(O-CH_2-\underset{\underset{CH_3}{|}}{CH})_y-OR_5 \qquad (Ia)$$

steht

| | |
|---|---|
| P | eine Zahl von 1—8 und |
| q | Null oder die Zahl 1 bedeutet, |
| Y | für |

$$-\underset{\underset{CH_2OH}{|}}{CH}- \;,\; -\underset{\underset{OH}{|}}{CH}-CH_2-,\; -O-CH_2-CHOH-CH_2- \text{ oder } -O-CH_2-\underset{\underset{CH_2-OH}{|}}{CH}-$$

steht,

| | |
|---|---|
| $R_5$ | einen Alkylrest eines niederen Alkohols darstellt, |
| x und y | für die Zahlen 5—100 steht, dadurch gekennzeichnet, daß der Rest |

$$-(O-CH_2-CH_2)_x-(O-CH_2-\underset{\underset{CH_3}{|}}{CH})_y-OR_5$$

durch Umsetzung eines niederen Alkohols $R_5OH$ zunächst mit einer Mischung aus Propylenoxid und 80—90% der gesamten Menge des Ethylenoxides und anschließend mit den restlichen 10—20% des Ethylenoxides herstellbar ist.

2. Oxalkylierte Polysiloxane der allgemeinen Formeln (I) und (Ia) gemäß Anspruch 1, in der

| | |
|---|---|
| $R_1$, $R_2$ und $R_3$ | den Methyl- oder Phenylrest und |
| $R_4$ | die Methylgruppe oder Wasserstoff bedeutet, |
| n | für die Zahlen 3—20 und |
| m | für die Zahlen 0—20 steht, |
| y | $-O-CH_2-CHOH-CH_2-$ oder $-O-CH_2-\underset{\underset{CH_2-OH}{|}}{CH}-$ bedeutet, |
| P | für die Zahlen 1 oder 3 und |
| q | für Null oder die Zahl 1 steht, |
| $R_5$ | einen 1 bis 6 C-Atome enthaltenden Alkylrest darstellt, |
| x | für die Zahlen 10 bis 50 und |
| y | für die Zahlen 8 bis 40 steht. |

3. Oxalkylierte Polysiloxane der allgemeinen Formel I und Ia gemäß Anspruch 1 und 2, in der

| | |
|---|---|
| $R_1$, $R_2$, $R_3$ und | |
| $R_4$ | den Methylrest bedeutet, |
| n | für die Zahlen 4—10 und |
| m | für die Zahlen 0—10 steht, |
| P | für die Zahl 3 und |
| q | für die Zahl 1 steht, |
| x | für die Zahlen 15—35 und |
| y | für die Zahlen 12—25 steht. |

4. Verfahren zur Herstellung der Verbindungen gemäß Ansprüchen 1—3, dadurch gekennzeichnet, daß man Polyepoxypolysiloxane, erhalten durch Umsetzung von Expoxiden, die eine C—C Doppelbindung aufweisen, mit Si H gruppenhaltigen Polysiloxanen, mit Polyalkylenglykolmonoethern in Gegenwart von sauren Katalysatoren bei Temperaturen von 0 bis 100°C umsetzt, wobei die Polyalkylenglykolmonoether in 10—100%igem molaren Überschuß eingesetzt werden.

5. Verwendung der Verbindungen gemäß Ansprüchen 1—3 als Wärmesensibilisierungsmittel für Kautschuklatices.

6. Kautschuklatices enthaltend 0,05—10 Gew.% der Verbindungen gemäß Ansprüchen 1—3.

**Revendications**

1. Polysiloxanes oxalkylés de formule générale:

$$R_1-\overset{R_1}{\underset{R_1}{Si}}-O-\left(\overset{R_2}{\underset{X}{Si}}-O\right)_n-\left(\overset{R_3}{\underset{R_4}{Si}}-O\right)_m-\overset{R_1}{\underset{R_1}{Si}}-R_1 \qquad (I)$$

dans laquelle

| | |
|---|---|
| $R_1$, $R_2$ et $R_3$ | désignent, indépendamment l'un de l'autre, un reste alkyle et un reste aryle ayant 1 à 10 atomes de carbone éventuellement substitués par un halogène, |
| $R_4$ | est de l'hydrogène ou un reste alkyle ou aryle ayant 1 à 10 atomes de carbone éventuellement substitué par un halogène, |
| *n* | est un nombre de 1 à 50 et |
| *m* | est un nombre de 0 à 50 et |
| X | est le reste de formule: |

$$-(CH_2)_p-(Y)_q-(O-CH_2-CH_2)_x-(O-CH_2-\underset{\displaystyle CH_3}{\underset{|}{CH}})_y-OR_5 \qquad (Ia)$$

| | |
|---|---|
| *p* | est un nombre entier de 1 à 8 et |
| *q* | est égal à 0 ou à 1, |
| Y | est un groupe: |

$$-\underset{\displaystyle CH_2OH}{\underset{|}{CH}}- \;,\; -\underset{\displaystyle OH}{\underset{|}{CH}}-CH_2-,\; -O-CH_2-CHOH-CH_2- \text{ ou } -O-CH_2-\underset{\displaystyle CH_2-OH}{\underset{|}{CH}}-$$

| | |
|---|---|
| $R_5$ | représente un reste alkyle d'un alcool inférieur, |
| *x* et *y* | représentent les nombres de 5 à 100, caractérisés en ce que le reste de formule: |

$$-(O-CH_2-CH_2)_x-(O-CH_2-\underset{\displaystyle CH_3}{\underset{|}{CH}})_y-OR_5$$

peut être engendré par réaction d'un alcool inférieur $R_5OH$ d'abord avec un mélange d'oxyde de propylène et de 80 à 90% de la quantité totale d'oxyde d'éthylène, puis avec les 10 à 20% restants d'oxyde d'éthylène.

2. Polysiloxanes oxalkylés de formules générales (I) et (Ia) suivant la revendication 1, dans lesquelles

| | |
|---|---|
| $R_1$, $R_2$ et $R_3$ | désignent le reste méthyle ou phényle et |
| $R_4$ | désigne le groupe méthyle ou l'hydrogéne |
| *n* | représente les nombres de 3 à 20 et |
| *m* | représente les nombres de 0 à 20, |
| Y | désigne un groupe: |

$$-O-CH_2-CHOH-CH_2- \text{ ou } -O-CH_2-\underset{\displaystyle CH_2-OH}{\underset{|}{CH}}-$$

| | |
|---|---|
| *p* | représente les nombres 1 ou 3 et |
| *q* | représente 0 ou le nombre 1 |
| $R_5$ | désigne un reste alkyle renfermant 1 à 6 atomes de carbone, |
| *x* | représente les nombres de 10 à 50 et |
| *y* | représente les nombres de 8 à 40 |

3. Polysiloxanes oxalkylés de formule générale I et Ia suivant les revendications 1 et 2, dans laquelle

| | |
|---|---|
| $R_1$, $R_2$, $R_3$ et $R_4$ | désignent le reste méthyle, |
| *n* | représente les nombres de 4 à 10 et |
| *m* | représente les nombres de 0 à 10, |

*p* représente le nombre 3 et
*q* représente le nombre 1,
*x* représente les nombres de 15 à 35 et
*y* représente les nombres de 12 à 25.

4. Procédé de production des composés suivant les revendications 1 à 3, caractérisé en ce qu'on fait réagir avec des monoéthers de polyalkylèneglycols en présence de catalyseurs acides, à des températures de 0 à 100°C, des polyépoxypolysiloxanes obtenus par réaction d'époxydes, qui présentent une double liaison C—C, avec des polysiloxanes porteurs de groupes Si H, les monoéthers de polyalkylèneglycols étant utilisés en un excès molaire de 10 à 100%.

5. Utilisation des composés suivant les revendications 1 à 3 comme agents thermosensibilisants pour des latex de caoutchouc.

6. Des latex de caoutchouc contenant 0,05 à 10% en poids des composés suivant les revendications 1 à 3.

**Claims**

1. Hydroxyalkylated polysiloxanes of the general formula

$$R_1-\underset{R_1}{\overset{R_1}{Si}}-O\left(-\underset{X}{\overset{R_2}{Si}}-O-\right)_n\left(-\underset{R_4}{\overset{R_3}{Si}}-O-\right)_m-\underset{R_1}{\overset{R_1}{Si}}-R_1 \qquad (I)$$

in which

$R_1$, $R_2$ and $R_3$ denote, independently of each other, an alkyl and aryl radical with 1 to 10 C atoms, optionally substituted by halogen,
$R_4$ represents hydrogen or an alkyl or aryl radical with 1 to 10 C atoms, optionally substituted by halogen,
n represents a number from 1 to 50 and
m represents a number from 0 to 50 and
X represents the radical

$$-(CH_2)_p-(Y)_q-(O-CH_2-CH_2)_x-(O-CH_2-\underset{CH_3}{\underset{|}{CH}})_y-OR_5 \qquad (Ia)$$

P denotes a number from 1 to 8 and
q denotes zero or the number 1,
Y represents

$$-\underset{CH_2OH}{\underset{|}{CH}}-\ ,\ -\underset{OH}{\underset{|}{CH}}-CH_2-,\ -O-CH_2-CHOH-CH_2-\ \text{or}\ -O-CH_2-\underset{CH_2-OH}{\underset{|}{CH}}-$$

$R_5$ represents an alkyl radical of a lower alcohol,
x and y denotes the numbers 5 to 100, characterised in that the radical

$$-(O-CH_2-CH_2)_x-(O-CH_2-\underset{CH_3}{\underset{|}{CH}})_y-OR_5$$

is able to be prepared by the reaction of a lower alcohol $R_5OH$ first of all with a mixture of propylene oxide and 80—90% of the total quantity of the ethylene oxide and then with the remaining 10—20% of the ethylene oxide.

2. Hydroxyalkylated polysiloxanes of the general formulae (I) and (Ia) according to Claim 1, in which

$R_1$, $R_2$ and $R_3$ denote the methyl or phenyl radical and
$R_4$ denotes the methyl group or hydrogen,
n represents the numbers 3 to 20 and
m represents the numbers 0 to 20,
y denotes

$$—O—CH_2—CHOH—CH_2— \text{ or } —O—CH_2—\underset{\substack{|\\ CH_2—OH,}}{CH}—$$

| | |
|---|---|
| P | represents the numbers 1 or 3 and |
| q | represents zero or the number 1, |
| $R_5$ | represents an alkyl radical containing 1 to 6 C atoms, |
| x | represents the numbers 10 to 50 and |
| y | represents the numbers 8 to 40. |

3. Hydroxyalkylated polysiloxanes of the general formula I and Ia according to Claims 1 and 2, in which

| | |
|---|---|
| $R_1$, $R_2$, $R_3$ and $R_4$ | denote the methyl radical, |
| n | represents the numbers 4 to 10 and |
| m | represents the numbers 0 to 10, |
| P | represents the number 3 and |
| q | represents the number 1, |
| x | represents the numbers 15 to 35 and |
| y | represents the numbers 12 to 25. |

4. Process for the preparation of the compounds according to Claims 1 to 3, characterised in that polyepoxypolysiloxanes, obtained by the reaction of epoxides containing a C—C double bond with polysiloxanes containing SiH groups, are reacted with polyalkylene glycol monoethers in the presence of acid catalysts at temperatures of 0 to 100°C, the polyalkylene glycol monoethers being used in a 10—100% molar excess.

5. The use of the compounds according to Claims 1 to 3 as heat sensitizers for the rubber latexes.

6. Rubber latexes containing 0.05—10% by weight of the compounds according to Claims 1 to 3.